Europäisches Patentamt

European Patent Office

Office européen des brevets

(11) Veröffentlichungsnummer: **0 448 818 A2**

## (12) EUROPÄISCHE PATENTANMELDUNG

(21) Anmeldenummer: 90124705.6

(22) Anmeldetag: **19.12.90**

(51) Int. Cl.5: **G01N 23/18**, G01M 17/02

(30) Priorität: **06.02.90 EP 90102379**

(43) Veröffentlichungstag der Anmeldung:
**02.10.91 Patentblatt 91/40**

(84) Benannte Vertragsstaaten:
**AT BE CH DE DK ES FR GB GR IT LI LU NL SE**

(71) Anmelder: **Spezialmaschinenbau Steffel GmbH & Co. KG**
**Robert-Bosch-Strasse 1-3**
**W-2418 Ratzeburg(DE)**

(72) Erfinder: **Steffel, Horst**
**Am Fürstenhof 9**
**W-2401 Gross Grönau(DE)**

(74) Vertreter: **Dipl.-Ing. H. Hauck Dipl.-Ing. E. Graalfs Dipl.-Ing. W. Wehnert Dr.-Ing. W. Döring**
**Neuer Wall 41**
**W-2000 Hamburg 36(DE)**

(54) **Vorrichtung für die Prüfung von Werkstücken mittels Röntgenstrahlen, insbesondere von Kraftfahrzeugreifen.**

(57) Eine Vorrichtung zur Prüfung von Werkstücken mittels Röntgenstrahlen enthält mindestens eine lineare Anordnung von für Röntgenstrahlen empfindliche Dioden, die in sehr engem Abstand voneinander angeordnet sind. Dadurch wird eine hohe Auflösung erhalten. Erstrecken sich z.B. zu prüfende Fäden in die gleiche Richtung wie die Diodenzeile und haben einen Abstand, der kleiner ist als die entsprechende Ausdehnung der Empfangsfläche der Dioden, ist eine wirksame Auflösung nicht mehr möglich. Es wird daher eine Blende der Diodenzeile zugeordnet, deren Breite kleiner ist als die Erstreckung der Empfangsfläche quer zum Blendenschlitz. Ferner wird eine Umschaltvorrichtung vorgesehen, die ermöglicht, beim Abtasten der Dioden bestimmte Dioden zu überspringen, um die Abtastgeschwindigkeit zu vergrößern.

Fig.1

# VORRICHTUNG FÜR DIE PRÜFUNG VON WERKSTÜCKEN MITTELS RÖNTGENSTRAHLEN, INSBESONDERE VON KRAFTFAHRZEUGREIFEN

Die Erfindung bezieht sich auf eine Vorrichtung für die Prüfung von Werkstücken mittels Röntgenstrahlen, insbesondere von Kraftfahrzeugreifen nach dem Oberbegriff des Patentanspruchs 1.

Aus der EP-A-0 315 099 ist eine Vorrichtung zur allseitigen Röntgenprüfung von Kraftfahrzeugreifen bekanntgeworden, bei der eine Röntgenrundstrahlröhre verwendet wird, die nahe dem Inneren eines Kraftfahrzeugreifens angeordnet ist und die Reifenflanken und die Lauffläche allseitig durchstrahlt. Auf der Außenseite des zu prüfenden Reifens sind in U-Formation drei Diodenanordnungen angeordnet, welche das aus dem Reifen austretende Röntgenlicht empfangen.

Jede Diodenanordnung weist eine lineare Reihe von lichtempfindlichen Dioden auf, beispielsweise mit einer Teilung von 0,45 oder gar einer Teilung von 0,225 mm. Die Empfangsfläche der Dioden ist mit einer fluoreszierenden Schicht versehen. Das von den Röntgenstrahlen in der fluoreszierenden Schicht verursachte Licht wird von den lichtempfindlichen Dioden registriert und in ein elektrisches Signal umgewandelt. Die Dioden in den Diodenanordnungen werden von einer Abtastvorrichtung seriell abgetastet, und die Ausgangssignale der Dioden werden auf einen Speicher gegeben. Eine aus einzelnen Bildpunkten bestehende Bildwiedergabevorrichtung dient zur Erzeugung von Bildzeilen pro Abtastsequenz für eine Diodenanordnung. Auf dem Bildschirm der Diodenanordnung wird daher ein bestimmter Flächenabschnitt des zu prüfenden Reifenabschnitts abgebildet. Die bekannte Vorrichtung ermöglicht eine annähernd senkrechte Durchstrahlung aller zu prüfenden Bereiche und ermöglicht nicht zuletzt dadurch eine verzerrungsfreie Darstellung auf der Wiedergabevorrichtung. Die Diodenanordnungen sind in ihrem Abstand zum Reifen verstellbar, so daß auch bei unterschiedlich großen Reifen stets ein gleicher Abbildungsmaßstab erreicht werden kann, was die Prüfung eines Reifens durch eine Kontrollperson erheblich erleichtert. Von besonderem Vorteil ist, daß auch bei Reifenverstärkungen aus Kunststoffmaterial (Kunststoffcord) trotz des geringen Kontrastes eine Bildschirmwiedergabe möglich ist.

Die lichtempfindlichen Dioden einschließlich ihrer Elektronik sind in einem luftdicht abgeschlossenen Gehäuse untergebracht, um die empfindlichen Teile gegen Einwirkungen aus der Umgebung, insbesondere gegen Staub zu schützen. Das Gehäuse benötigt zwar einen Durchtrittsschlitz für die Röntgenstrahlung, dieser ist jedoch ebenfalls abgedeckt, allerdings durch ein strahlendurchlässiges Material, um eine Absorption der Röntgenstrahlung zu vermeiden. Außerdem ist der Gehäusebereich zumindest beidseits des Durchtrittsschlitzes mit einer Bleiabschirmung versehen, die verhindern soll, daß durch die Gehäusewandung hindurchtretende Röntgenstrahlung die Schaltungselektronik für die Dioden beeinträchtigt oder gar zerstört.

Die Abmessung des Gehäuses bei der bekannten Diodenanordnung in Richtung der Einstrahlung ist verhältnismäßig groß, wobei die Dioden nahe der dem Durchtrittsschlitz gegenüberliegenden Wand des Gehäuses angeordnet sind. Die Breite des Durchtrittsschlitzes kann jedoch nicht beliebig klein gemacht werden, da sichergestellt werden muß, daß die ankommende Strahlung mit Sicherheit in der Ebene der Diodenreihe einfällt. Toleranzen im Gehäuse der Diodenanordnung und in der übrigen Prüfeinrichtung erfordern daher eine Mindesteintrittsweite im Durchtrittsschlitz. Dadurch besteht jedoch die Gefahr, daß auch den Dioden benachbarte Bereiche von der Röntgenstrahlung getroffen und, soweit es sich um empfindliche Teile und Komponenten handelt, beeinträchtigt werden. Ihre Lebensdauer wird beträchtlich verringert. Außerdem kann die über eine größere Breite in das Gehäuse eintretende Röntgenstrahlung im Gehäuse eine Streustrahlung verursachen, wodurch die Lebensdauer der Elektronikbauteile ebenfalls verkürzt wird.

Durch eine sehr kleine Teilung der Dioden einer Diodenzeile läßt sich eine hohe Auflösung erzielen, so daß z.B. auch Verstärkungen in Reifen aus Kunststoffasern geprüft werden können. Es sind bereits Diodenzeilen herstellbar, die eine Teilung von 0,2225 aufweisen. Die Erstreckung der Empfangsfläche derartiger Dioden quer zur Linie der Dioden ist jedoch aus technischen Gründen erheblich größer und liegt derzeit bei etwa 0,6 mm. Soll nun ein Gewebe geprüft werden, bei dem Fäden auch annähernd parallel zur Diodenlinie verlaufen und haben die Fäden einen Abstand der kleiner ist als die Erstreckung der Dioden quer zur Diodenzeile kann geschehen, daß zwei Fäden gleichzeitig auf der Empfangsfläche abgebildet werden. Es kommt zu einer elektrischen Mittelwertbildung, und eine einwandfreie Auflösung ist nicht mehr gewährleistet.

Die Röntgenprüfung z.B. von Kraftfahrzeugreifen beruht auf der Tatsache, daß das Reifengrundmaterial und die Einlagen die Röntgenstrahlung unterschiedlich absorbieren. Zwischen dem Grundmaterial des Reifens und z.B. Stahleinlagen läßt sich ein relativ deutlicher Kontrast erzielen. Es ist auch bekannt, Reifen mit Textileinlagen (Kunststoffcord) zu verstärken, insbesondere die Reifenflanken. Derartige Einlagen weisen gegenüber Gummi eine geringere Dichte auf und erzeugen einen relativ schwachen Kontrast. Reifen, die sowohl Stahl- als auch textile Einlagen aufweisen, können daher nicht gleichzeitig geprüft werden. Um zum Beispiel bei Kunststoffcord eine zufriedenstellende Auflösung zu erhalten, muß die Röntgenrundstrahlröhre mit relativ kleiner Spannung betrieben werden. Diese Spannung reicht indessen nicht aus, um die Struktur von Stahleinlagen genügend sichtbar zu machen. Es ist daher nötig, unterschiedliche Spannungen einzustellen je nachdem, welche Reifenverstärkung untersucht werden soll.

Bei der erfindungsgemäßen Anordnung ist innerhalb des Gehäuses nahe der Diodenreihe eine Abschirmung aus einem Röntgenstrahlung absorbierenden Material, z.B. aus Blei angeordnet, die einen zum ersten Durchtrittsschlitz und zur Diodenreihe ausgerichteten zweiten Durchtrittsschlitz bildet, dessen Breite kleiner ist als die des ersten Durchtrittsschlitzes und kleiner als die Ausdehnung der Dioden quer zur Diodenzeile. Nach einer Ausgestaltung der Erfindung ist die Breite des zweiten Durchtrittsschlitzes höchsten halb so groß wie die Erstreckung der Empfangsfläche der Dioden quer zur Richtung der Diodenzeile.

Bei der Erfindung ist der erste Durchtrittsschlitz so bemessen, daß unabhängig von auftretenden Toleranzen ausreichend Röntgenstrahlung in das Gehäuse eintritt. Die zweite aus den beiden Bleistreifen oder -platten bestehende Abschirmung bildet einen schmaleren Schlitz, der sicherstellt, daß nur die Empfangsfläche der Dioden von Röntgenstrahlung bestrahlt wird, nicht jedoch die danebenliegende strahlenempfindliche Elektronik. Insbesondere wird jedoch bei der beschriebenen Bemessung des Eintrittsschlitzes der Vorteil erhalten, daß die Röntgenstrahlung nur auf einen Teil der Empfangsfläche der Diode auftrifft. Dadurch kann eine höhere Auflösung erhalten werden, wobei der Grad der Auflösung von der Breite des Schlitzes abhängt. Wird beispielsweise ein Kraftfahrzeugreifen oder ein Karkassenstrang zur Herstellung eines Kraftfahrzeugreifens geprüft, bei dem Fäden auch parallel zur Erstreckung des Durchtrittsschlitzes verlaufen, können diese sehr eng beieinander liegen und gleichwohl deutlich sichtbar gemacht werden.

Bei der erfindungsgemäßen Vorrichtung sind die Dioden der Diodenanordnungen in einem eine hohe Auflösung bewirkenden insbesondere textile Einlagen im Reifen ausreichend sichtbar·machenden Abstand angeordnet. Der Abstand der Dioden, insbesondere der den Reifenflanken zugeordneten Diodenzeilen, ist so bemessen, daß - bei entsprechend gewählter Spannung an der Röntgenröhre - auch eine ausreichende Auflösung bei Kunststoffcord erzielt wird. Der Abstand beträgt zum Beispiel weniger als 0,5 mm, vorzugsweise weniger als 0,3 mm oder kleiner. In Anpassung an herkömmliche Bildwiedergabevorrichtungen bedeutet dies eine Anzahl von 1024 Dioden pro Diodenzeile bzw. 2048. Insbesondere die letztere Anzahl von Dioden pro Zeile ist vollständig ausreichend, bei entsprechender Betriebsspannung der Röntgenrundstrahlröhre eine zufriedenstellende Auflösung bei Kunststoffadeneinlagen zu erreichen.

Bei einer vorgegebenen Abtastfrequenz hängt die Dauer einer Abtastsequenz von der Anzahl der abgetasteten Dioden pro Diodenzeile ab. Mithin wird der Vorteil einer höheren Auflösung mit einer längeren Prüfzeit erkauft. Da nun der Anteil Kunststoffcord aufweisender Reifen im Verhältnis zu Reifen, die ausschließlich·Stahleinlagen aufweisen, gering ist, würde eine Anlage, die sowohl Reifen mit Kunststoffcord als auch Stahlcord zu prüfen in der Lage ist, eine relativ lange Prüfdauer pro Kraftfahrzeugreifen verursachen. Hier setzt das weitere Merkmal der Erfindung ein, bei dem mit Hilfe einer entsprechenden Umschaltvorrichtung die Abtasteinrichtung wahlweise nur jede zweite, dritte usw. Diode einer Diodenzeile abgetastet wird. Die erfindungsgemäße Vorrichtung ist daher im Hinblick auf den Aufbau der Diodenzeilen so ausgelegt, daß für die Prüfung von Reifen mit Kunststoffcord eine zufriedenstellende Auflösung erzielt wird. Wird zum Beispiel bei Stahlcord diese Auflösung nicht benötigt, tastet die Abtasteinrichtung nicht sämtliche Dioden einer Diodenreihe ab, sondern nur jede zweite, dritte usw. Dadurch wird naturgemäß die Abtastzeit um die Hälfte, um ein Drittel usw. verringert. Bei der erfindungsgemäßen Vorrichtung wird daher in Abhängigkeit von den Eigenschaften der verstärkenden Einlagen eine optimale Prüfzeit für die zu prüfenden Reifen erhalten. Es versteht sich, daß die Abtastung der Diodenzeilen entgegen einer Abtastung in linearer Folge auch block- oder gruppenweise erfolgen kann. Bei einer Abtastung mit geringerer Auflösung wird dann immer nur ein Teil der Dioden einer Gruppe bzw. eines Blocks abgetastet, d.h. vorgegebene Dioden (z.B. die geradzahligen einer Reihe) werden bei der Abtastung übersprungen.

Die Erfindung wird nachfolgend anhand eines Ausführungsbeispiels näher erläutert.

Fig. 1    zeigt äußerst schematisch ein Blockschaltbild der Vorrichtung nach der Erfindung.

Fig. 2    zeigt eine Draufsicht auf eine Diodenanordnung.

Fig. 3    zeigt eine Seitenansicht der Diodenanordnung nach Fig. 2 in Richtung Pfeil 3.

Fig. 4    zeigt einen Schnitt durch die Diodenanordnung nach Fig. 2 entlang der Linie 4-4.

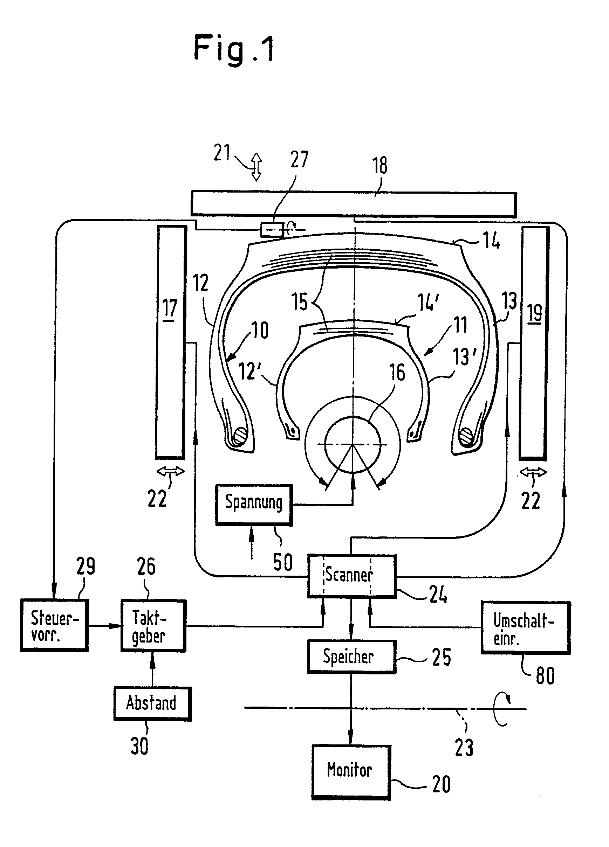

In Fig. 1 sind zwei in der Größe unterschiedliche Reifen 10, 11 gezeigt. Ihre Lauffläche 14, 14' ist mit einem Stahlcord versehen. Die Flanken oder Seitenwände 12, 13 bzw. 12', 13' sind je nach Reifentyp mit einem Stahlcord oder einem Kunststoffcord versehen. Der Reifen 10 bzw. 11 ist um seine Achse in bekannter Weise drehbar abgestützt. Er wird mit Hilfe einer nicht gezeigten Drehvorrichtung um seine Achse 23 gedreht, die zum Beispiel in einer vertikalen Ebene liegt, wobei die Umfangsgeschwindigkeit vom Bedienungsmann vorgegeben und geändert werden kann. Die entsprechenden konstruktiven Vorkehrungen hierfür sind nicht gezeigt; sie sind Stand der Technik. Auch die bei Röntgenprüfvorrichtungen üblichen Schutzvorkehrungen sind nicht gezeigt.

Man erkennt ferner, daß eine Röntgenrundstrahlröhre 16 am Eingang der Reifen 10 bzw. 11 angeordnet ist. In einer radialen Ebene zum Reifen (hier in der Zeichenebene) weist die Röntgenrundstrahlröhre 16 zum Beispiel einen Strahlungswinkel von etwa 300° auf. In der radialen Ebene werden daher alle Bereiche des Reifens von der Strahlung der Röhre 16 durchstrahlt, und zwar annähernd in einem Durchstrahlwinkel von 90°. Es versteht sich, daß die Lage der Röntgenrundstrahlröhre 16 auch verlegt werden kann, zum Beispiel weiter in den Reifen hinein oder auch weiter außerhalb. In einer Ebene senkrecht zur Radialebene weist die Röhre 16 einen Strahlungswinkel von zum Beispiel 40° auf.

Auf der Außenseite der Reifenflanken 12, 13 bzw. 12', 13' und der Außenseite der Lauffläche 14 bzw. 14' sind Diodenanordnungen 17, 18, 19 vorgesehen. In Fig. 1 sind diese lediglich schematisch angedeutet. Jede Diodenanordnung 17 bis 19 enthält eine lineare Anordnung einzelner lichtempfindlicher Dioden, zum Beispiel 2048 pro Diodenanordnung in einem Abstand von 0,225 mm, deren Empfangsfläche mit einer fluoreszierenden Schicht versehen ist, die aus den Röntgenstrahlen ein für die Dioden verwertbares Licht erzeugt. Die Anordnung der Diodenreihen ist annähernd parallel zum Durchmesser bzw. parallel zur Achse der Reifen 10 bzw. 11. Die Dioden werden von einem Scanner 24 periodisch abgetastet, wobei die abgetasteten Signale in bekannter Weise im Speicher 25 so gespeichert werden, daß eine Reihe von Abtastungen gleichzeitig auf einer Wiedergabevorrichtung 20, beispielsweise einem Bildschirm, erscheint. Die Wiedergabevorrichtung 20 ist ebenfalls schematisch angedeutet. Sie besteht aus drei einzelnen Bildschirmen (nicht gezeigt).

Die Abtastgeschwindigkeit des Scanners wird von einem Taktgeber 26 vorgegeben. Der Lauffläche 14, 14' der Reifen 10, 11 ist ein Geschwindigkeitsfühler 27, zum Beispiel eine Tachometerrolle, zugeordnet. Sein Ausgangssignal geht auf eine Steuervorrichtung 29, die mit dem Taktgeber 26 verbunden ist. Die Abtastgeschwindigkeit des Scanners 24 wird nach Maßgabe der Geschwindigkeit der Reifen 10, 11 variiert, um einen gleichen Abbildungsmaßstab bei vorgegebenem Abstand der Diodenanordnungen 17 bis 19 vom Reifen zu erhalten. Für die Reifengeschwindigkeit der Flanken errechnet die Steuervorrichtung 29 einen Mittelwert. Die Abtastung für die Lauffläche 14, 14' einerseits und für die Flanken 12, 12' andererseits ist daher unterschiedlich. Ändert sich der Abstand der Diodenanordnungen 17 bis 19 in bezug auf den Reifen 10 bzw. 11, muß die Taktfrequenz ebenfalls geändert werden. Dies ist durch Block 30 angedeutet.

Wie durch die Doppelpfeile 21 und 22 angedeutet, können die Diodenanordnungen 17 bis 19 relativ zum Reifen 11, 12 verstellt werden. Dies wird im einzelnen nicht beschrieben und ist zum Beispiel aus der eingangs erwähnten EP-A-0 315 099 bekannt.

Die Spannungsversorgung ist in der Zeichnung durch den Block 50 angedeutet. Die Spannung kann variiert werden, um einen optimalen Kontrast zu erzeugen. Kunststoffcord benötigt eine "weichere" Spannung als Stahlcord. Außerdem hängt die Spannung von der Dicke des zu prüfenden Materials ab. Der Block 50 kann daher auch mit einer Vorrichtung verbunden sein, welche Signale aus einer Dickenmeßvorrichtung erhält.

Die Dioden der Diodenanordnungen 17 bis 19 sind sehr dicht nebeneinander angeordnet, wie bereits erwähnt. Ihr Abstand beträgt zum Beispiel 0,225 mm. Es versteht sich, daß der Bildschirm des Monitors 20 eine entsprechende Anzahl von Bildpunkten pro Zeile aufweist. Die Abtastgeschwindigkeit ist relativ hoch, vorzugsweise 1 Pixel pro Millisekunde.

Dem Scanner 24 ist eine Umschalteinrichtung 80 zugeordnet. Die Umschalteinrichtung dient dazu, die Anzahl der pro Diodenreihe abzutastenden Dioden zu verändern. Beispielsweise kann der Scanner 24 so eingestellt werden, daß er nur jede zweite Diode einer Diodenreihe der Diodenanordnungen 17 bis 19 abtastet. Es versteht sich, daß die Auflösung bei einer Abtastung von nur jeder zweiten, dritten usw. Diode geringer ist als bei einer Abtastung jeder Diode; die schlechtere Auflösung reicht jedoch bei entsprechendem geringem Diodenabstand unter Umständen aus, zum Beispiel Stahleinlagen sicher zu erkennen. Ist hingegen erforderlich, textile Einlagen zu prüfen, bewirkt die Umschalteinrichtung 80, daß alle vorhandenen Dioden einer Diodenreihe zyklisch abgetastet werden.

Da, wie bereits erwähnt, in der Lauffläche regelmäßig Stahleinlagen vorhanden sind, während ein Teil der zu prüfenden Reifen Kunststoffeinlagen in den Reifenflanken aufweist, ist auch denkbar, die Diodenanordnungen 18 für die Lauffläche mit einer geringeren Anzahl von Dioden zu versehen, beispielsweise 1024, die bei jeder Sequenz sämtlich abgetastet werden. Nur die den Reifenflanken zugeordneten Diodenanordnungen 17 und 19 weisen dann jeweils 2048 Dioden auf, deren Abtastungsanordnung sich nach der Beschaffenheit des zu prüfenden Materials richtet.

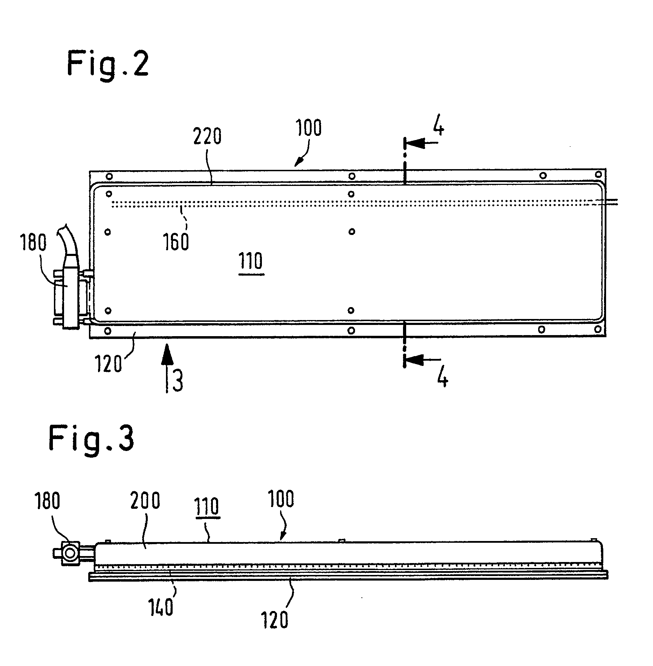

In den Figuren 2 und 3 ist ein Gehäuse 100 zu erkennen, das aus einer relativ flachen Haube 110 und einer gegen die Haube 110 geflanschten Platte 120 besteht. In der Haube ist an einer Stirnseite bei 140 ein länglicher Durchtrittsschlitz geformt (Fig. 3), der von einer nicht weiter gezeigten strahlendurchlässigen Abdeckung bedeckt ist. Nahe der den Schlitz 140 aufweisenden Stirnwand des Gehäuses 100 ist eine Reihe von Dioden 160 im Gehäuse 100 angeordnet. Beispielsweise sind 1024 oder 2048 Dioden mit einer Teilung von 0,45 bzw. 0,225 mm in einer Reihe angeordnet. Am einen Ende des Gehäuses ist ein Anschluß 180 für die elektrische Versorgung der Dioden und die Signalleitung zu den Dioden 160 vorgesehen sowie eine Verbindung mit der innerhalb des Gehäuses 100 angeordneten Elektronik für die Dioden 160 (nicht gezeigt).

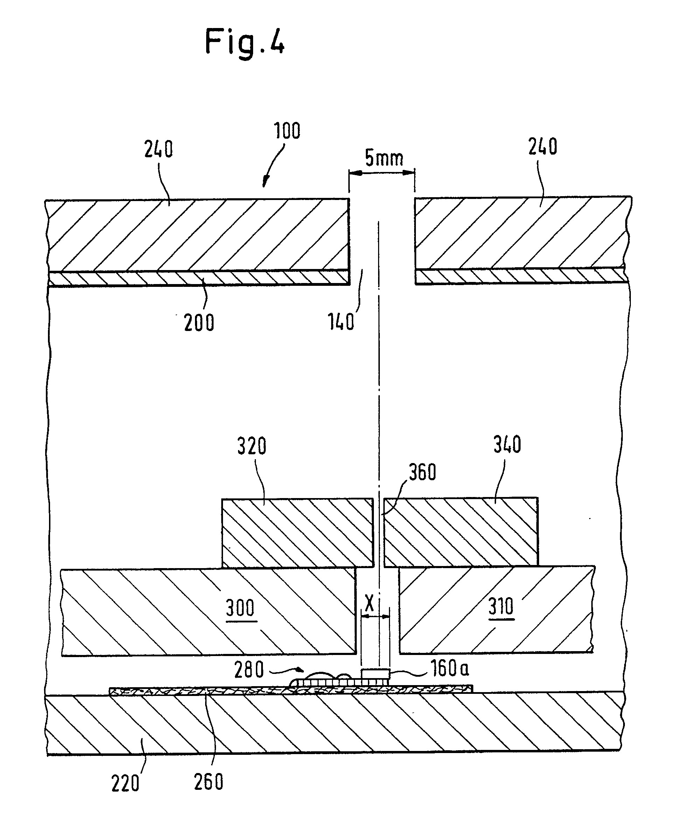

In Fig. 4 sind die den Durchtrittsschlitz 140 aufweisende Vorderwand 200 und die gegenüberliegende Rückwand 220 zu erkennen. Auf die Vorderwand 200 ist eine Bleiabschirmung 240 aufgebracht, die bündig mit dem Durchtrittsschlitz 140 abschließt. Der hierdurch insgesamt gebildete Durchtrittsschlitz hat eine Breite von annähernd 5 mm. Die den Schlitz 140 normalerweise verschließende Abdeckung, die ein Eindringen von Staub verhindern soll, ist nicht gezeigt.

An der Innenseite der gegenüberliegenden Wand 220 ist eine Schaltplatine 260 angeordnet, die eine allgemein mit 280 bezeichnete Elektronik trägt für die Dioden, von denen eine einzelne bei 160a zu erkennen ist. Nahe der Elektronik 280 bzw. den Dioden 160a sind Halter 300 bzw. 310 aus Aluminium angeordnet, die schmale Bleiplatten 320, 340 halten, die zwischen sich einen Schlitz 360 bilden, dessen Mitte zur Mitte des Durchtrittsschlitzes 140 ausgerichtet ist. Die gemeinsame Achse der Schlitze 140, 360 ist wiederum zur Achse der Diode 160a ausgerichtet. Wie zu erkennen, liegen die Halter 300, 310 gegenüber dem Schlitz 360 etwas zurück. Dadurch wird die Bildung von Streustrahlung durch die Halter 300, 310 verhindert, welche die Lebensdauer der Elektronik verkürzen würde. Die Breite X des Schlitzes 360 beträgt zum Beispiel 0,2 bis 0,4 mm. Sie ist auf jeden Fall kleiner als die Ausdehnung der Empfangsfläche der Diode 160a quer zur Längsrichtung des Schlitzes 360, die zum Beispiel 0,6 mm beträgt. Durch die von den Streifen oder Platten 320, 340 gebildete Bleiabschirmung ist auch sichergestellt, daß die Elektronik 280 in jedem Falle von Röntgenstrahlung nicht getroffen wird, die Dioden 160a jedoch ausreichend Röntgenstrahlung empfangen aufgrund der ausreichenden Breite des Durchtrittsschlitzes 140 unabhängig von der toleranzbehafteten Position des gesamten Gehäuses 100 gegenüber der Strahlungsquelle bzw. innerhalb der gesamten Prüfvorrichtung.

Der Schlitz 360 kann auch in einer einzelnen Platte geformt werden durch eine geeignete Bearbeitungsmethode, z.B. mittels Laserbearbeitung.

**Patentansprüche**

1. Vorrichtung für die Prüfung von Werkstücken mittels Röntgenstrahlen, insbesondere von Kraftfahrzeugreifen, bei der mindestens eine lineare Anordnung von für Röntgenstrahlen empfindliche Dioden in einem luftdicht abgeschlossenen länglichen Gehäuse angeordnet ist, das einen länglichen, von strahlungsdurchlässigem Material abgedeckten Durchtrittsschlitz parallel zur Diodenreihe aufweist und bei dem die der Röntgenstrahlungsquelle zugekehrte Seite des Gehäuses beidseits vom Durchtrittsschlitz eine Bleiabschirmung aufweist und bei der eine Abtasteinrichtung die Dioden mit vorgegebener veränderlicher Frequenz abtastet zwecks Speicherung und Wiedergabe der Ausgangssignale der Dioden mittels eines Monitors, wobei jeweils eine Bildzeile pro Abtastfrequenz auf dem Monitor erzeugt wird, dadurch gekennzeichnet, daß die Dioden in einem eine hohe Auflösung bewirkenden, insbesondere textile Einlagen, z.B. in einem Reifen (10, 11) sichtbar machenden Abstand angeordnet sind, vorzugsweise gleich oder kleiner als 0,5 mm und im Inneren des Gehäuses (100) nahe der Diodenreihe (160) eine Abschirmung (320, 340) aus Röntgenstrahlung absorbierendem Material angeordnet ist, die einen zum ersten Durchtrittsschlitz (140) und zur Diodenreihe (160) ausgerichteten zweiten Durchtrittsschlitz (360) bildet, dessen Breite kleiner ist als die des ersten Durchtrittsschlitzes (140) und kleiner ist als die Erstreckung (X) der Empfangsflächen der Dioden (160a) senkrecht zur Linienanordnung der Dioden (160a).

2. Anordnung nach Anspruch 1, dadurch gekennzeichnet, daß die Breite des zweiten Durchtrittsschlitzes (360) höchstens halb so groß ist wie die Erstreckung der Empfangsfläche der Dioden (160a).

3. Anordnung nach Anspruch 1 oder 2, dadurch gekennzeichnet, daß die Breite des ersten Durchtrittsschlitzes (14) größer ist als die Erstreckung (X) der Empfangsfläche der Dioden (160a), vorzugsweise ein Mehrfaches.

4. Anordnung nach einem der Ansprüche 1 bis 3, dadurch gekennzeichnet, daß Streifen oder Platten aus Blei (32, 34) von einem auch die Elektronikbauteile tragenden Halter (30, 31), vorzugsweise aus Aluminium, im Gehäuse (10) gehalten sind und der Abstand der Halter (30, 31) im Bereich des zweiten Durchtrittsschlitzes (36) größer ist als die Breite des zweiten Durchtrittsschlitzes.

5. Vorrichtung insbesondere nach einem der Ansprüche 1 bis 4, insbesondere zur allseitigen Röntgenprüfung eines drehbar abgestützten Kraftfahrzeugreifens während einer Reifenumdrehung, dadurch gekennzeichnet, daß der Abtasteinrichtung (24) eine Umschalteinrichtung (80) zugeordnet ist dergestalt, daß bei einer vorgegebenen Abtastfrequenz während einer Abtastsequenz wahlweise nur jede zweite, dritte usw. Diode abtastbar ist.

6. Vorrichtung nach einem der Ansprüche 1 bis 5, dadurch gekennzeichnet, daß der Abstand der Dioden 0,3 oder kleiner ist.

7. Vorrichtung nach Anspruch 5 oder 6, bei der für jede Diodenanordnung eine eigene Abtasteinrichtung vorgesehen ist, dadurch gekennzeichnet, daß die Umschaltvorrichtung den den Reifenseitenwandungen zugeordneten Diodenanordnungen (17, 19) zugeordnet ist.

8. Vorrichtung nach einem der Ansprüche 5 bis 7, dadurch gekennzeichnet, daß die Abtastgeschwindigkeit mindestens 10 m/Sek., vorzugsweise 1 Pixel pro Millisekunde, beträgt.

# Fig.1

## Fig.2

## Fig.3

# Fig.4